# EUROPÄISCHE PATENTSCHRIFT

(11) **EP 2 222 382 B1**
(45) Veröffentlichungstag und Bekanntmachung des Hinweises auf die Patenterteilung: **01.10.2014**
(21) Anmeldenummer: 08864556.9
(22) Anmeldetag: 18.12.2008
(51) Int. Cl.: B01D 29/21

(54) **FILTEREINRICHTUNG, INSBESONDERE FLÜSSIGKEITSFILTER**
FILTER DEVICE, ESPECIALLY LIQUID FILTER
SYSTÈME DE FILTRE, EN PARTICULIER FILTRE À LIQUIDE

(30) Priorität: 21.12.2007 DE 202007018076 U
(43) Veröffentlichungstag der Anmeldung: 01.09.2010
(73) Patentinhaber: Mann + Hummel GmbH, 71638 Ludwigsburg (DE)
(72) Erfinder: JOKSCHAS, Günter, 71540 Murrhardt (DE); KLUSON-HESSLINGER, Heike, 71691 Freiberg (DE); RÖSGEN, André, 73630 Remshalden (DE)
(86) Internationale Anmeldenummer: PCT/EP2008/067904
(87) Internationale Veröffentlichungsnummer: WO 2009/080706

(56) Entgegenhaltungen:
- EP-A- 1 306 117
- EP-A- 1 702 663
- US-A1- 2007 163 945

## Beschreibung

### Technisches Gebiet

Die Erfindung bezieht sich auf eine Filtereinrichtung, insbesondere einen Flüssigkeitsfilter wie Kraftstoff- oder Ölfilter, nach dem Oberbegriff des Anspruches 1.

### Stand der Technik

Eine Filtereinrichtung, die als Öl- oder Kraftstofffilter eingesetzt wird, ist in der DE 197 46 752 A1 beschrieben. Die Filtereinrichtung umfasst ein hohlzylindrisch ausgebildetes Filterelement, das an einem radial innen liegenden Stützgerüst gehalten ist und von dem zu reinigenden Fluid radial von außen nach innen durchströmt wird, wobei der Filterinnenraum einen axialen Abströmweg für das gereinigte Fluid bildet. Das Filterelement ist von stirnseitigen Endscheiben eingefasst, die eine zentrale Ausnehmung für die Ableitung des Fluids aus dem Filterinnenraum aufweisen. In die zentrale Ausnehmung der Endscheibe ist ein Dichtring eingesetzt, der an der Gehäuseinnenwand abgestützt ist und den axialen Abströmraum von der Anströmseite des Filterelementes separiert. Derartige Dichtungselemente sind für die strömungsdichte Trennung von Roh- und Reinseite zwingend erforderlich. Eine gattungsgemäße Filtereinrichtung ist aus der EP 1 306 117 A1 bekannt.

### Offenbarung der Erfindung

Der Erfindung liegt die Aufgabe zugrunde, mit einfachen Maßnahmen und in Raum sparender sowie wirkungsvoller Weise die Roh- von der Reinseite in einer Filtereinrichtung zu separieren.

Diese Aufgabe wird erfindungsgemäß mit den Merkmalen des Anspruches 1 gelöst. Die Unteransprüche geben zweckmäßige Weiterbildungen an.

Die Filtereinrichtung weist in einem Filtergehäuse ein hohlzylindrisches Filterelement auf, das radial von dem zu reinigenden Fluid zu durchströmen ist. Der Innenraum des Filterelementes bildet einen axialen Strömungsraum. An einer Stirnseite des Filterelements befindet sich eine Endscheibe, an der das Dichtungselement angeordnet ist. Dieses Dichtungselement ist an einen axial überstehenden, ringförmigen Stutzen angespritzt, der mit der Endscheibe verbunden ist.

Mit dieser Ausführung werden verschiedene Vorteile erzielt. Durch das Anspritzen des Dichtungselementes entfallen separate Montageschritte, die bei einer Ausführung des Dichtungselementes als eigenständiges Bauteil, insbesondere als Dichtring, andernfalls erforderlich wären. Bei der erfindungsgemäßen Ausführung genügt es dagegen, noch vor der Montage der Filtereinrichtung das Dichtungsmaterial an den ringförmigen Stutzen anzuspritzen, anschließend kann das Filterelement einschließlich Dichtscheibe und Stutzen mitsamt angespritztem Dichtungselement in das Filtergehäuse eingesetzt werden. Montagebedingte Fehlluftströme werden auf diese Weise vermieden.

Außerdem wird die Stabilität der Filtereinrichtung verbessert, da Kräfte in Achsrichtung im Wesentlichen von dem Stutzen auf das Filtergehäuse übertragen werden. Das Dichtungselement liegt zwar zwischen der Stirnseite des Stutzens und der Innenwand des Filtergehäuses; da dieser Abschnitt des Dichtungselementes jedoch üblicherweise sehr dünnwandig ist, ist durch die Verformung des Dichtungselementes keine Schiefilage der Filtereinrichtung zu befürchten, die zu Fehlluftströmen führen könnte.

Gemäß einer vorteilhaften Ausführung besteht das Dichtungselement aus einem spritzfähigen Silikonmaterial, insbesondere aus einem Fluor-Silikon-Kautschuk (FVMQ), das sich durch eine gute Kraftstoffbeständigkeit, insbesondere durch gute Dieselbeständigkeit auszeichnet und daher in besonderer Weise für einen Einsatz in Kraftstofffiltern geeignet ist.

Gemäß einer weiteren vorteilhaften Ausführung weist der Stutzen Formelemente auf, die zu einer verbesserten Haftung des Dichtungsmaterials am Stutzen beitragen. Diese Formelemente verändern die Oberfläche des Stutzens und sind als Erhebungen oder, gemäß einer bevorzugten Ausführung, als Ausnehmungen in der Wandung des Stutzens ausgebildet. In der Ausführung als Ausnehmungen können sich diese gleichmäßig über den Umfang des Stutzens verteilen. Beim Spritzvorgang lagert sich Dichtungsmaterial an den Formelementen an, wodurch ein zusätzlicher Widerstand gegen unbeabsichtigtes Lösen des Dichtungsmaterials vom Stutzen gegeben ist. Im Falle der Ausnehmungen in der Wandung des Stutzens sind die Ausnehmungen vorteilhafterweise vollständig von dem Dichtungsmaterial ausgefüllt, so dass keine Fehlluftströme durch die Ausnehmungen auftreten können.

Das Dichtungsmaterial ist zweckmäßigerweise sowohl auf die Innenseite, die Außenseite als auch die freie Stirnseite des Stutzens angespritzt, wodurch eine bestmögliche Dichtwirkung erzielt wird. Gleichwohl ist es grundsätzlich ausreichend, nur auf der Innenseite oder nur auf der Außenseite Dichtungsmaterial anzuordnen oder ggf. auch nur an der Stirnseite des Stutzens oder an einer Kombination von Stirnseite und Innenseite bzw. Außenseite des Stutzens Dichtmaterial vorzusehen.

Der ringförmige Stutzen ist in seiner einfachsten Ausführung als Zylinder ausgebildet, dessen Seitenwandungen und freie Stirnseite Träger des Dichtungsmaterials ist. Darüber hinaus kommen aber auch weitere Geometrien für den Stutzen in Betracht, beispielsweise ein Stutzen mit zylinderförmigem Abschnitt und sich daran winklig erstreckendem, weiterem Abschnitt oder ein Stutzen mit einer schräg verlaufenden, mit der Ebene der Endscheibe einen Winkel einschließenden Wandung. Das Dichtungsmaterial kann sich entweder über die gesamte Innenseite und Außenseite des Stutzens erstrecken, oder, gemäß einer weiteren Ausführung, lediglich über einen Teilbereich des Stutzens, so z.B. an dem winklig abstehenden Abschnitt des Stutzens.

Erfindungsgemäß sind zwei konzentrische Stutzen vorgesehen, die zueinander radial beabstandet sind, wobei das Dichtungsmaterial an beide Stutzen angespritzt ist. Da an jedem der beiden Dichtungselemente jeweils Dichtlinien gegeben sind, ist die Dichtwirkung verbessert.

Der Stutzen ist vorteilhafterweise einteilig mit der Endscheibe ausgebildet, beide Bauteile können aus einem Spritzguss-Kunststoff gefertigt sein. Grundsätzlich ist es aber auch möglich, Stutzen und Endscheibe als zwei separate Bauteile auszuführen, die miteinander verbunden werden.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine perspektivische Ansicht auf den unteren Teil einer Filtereinrichtung mit einem hohlzylindrischen Filterelement, dessen Stirnseite von einer Endscheibe eingefasst ist, die mit einer zentralen Ausnehmung zur Ableitung des gereinigten Fluids versehen ist, wobei die zentrale Ausnehmung von einem Stutzen eingefasst ist, an den Dichtungsmaterial angespritzt ist,
Fig. 2 einen Schnitt durch die Filtereinrichtung nach Fig. 1 im Bereich des Stutzens,
Fig. 3 eine Schnittdarstellung eines erfindungsgemäßen Ausführungsbeispieles, gemäß dem zwei konzentrisch zueinander angeordnete Stutzen vorgesehen sind, an die jeweils Dichtungsmaterial angespritzt ist,
Fig. 4 ein weiteres Beispiel, bei dem der Stutzen zusätzlich einen winklig angeordneten Abschnitt aufweist, der Träger des Dichtungselementes ist,
Fig.5 ein weiteres Beispiel, bei dem der Stutzen aus einer schräg verlaufenden Wandung besteht, die einteilig mit der Endscheibe ausgebildet ist.

### Ausführungsformen der Erfindung

In den Figuren sind gleiche Bauteile mit gleichen Bezugszeichen versehen.

Die in den Figuren dargestellten Filtereinrichtungen eignen sich zur Filtrierung von flüssigen oder gasförmigen Fluiden, insbesondere zur Filterung von Kraftstoff wie z.B. Dieselkraftstoff oder von Öl. Es kommt auch eine Anwendung beispielsweise als Luftfilter in Betracht.

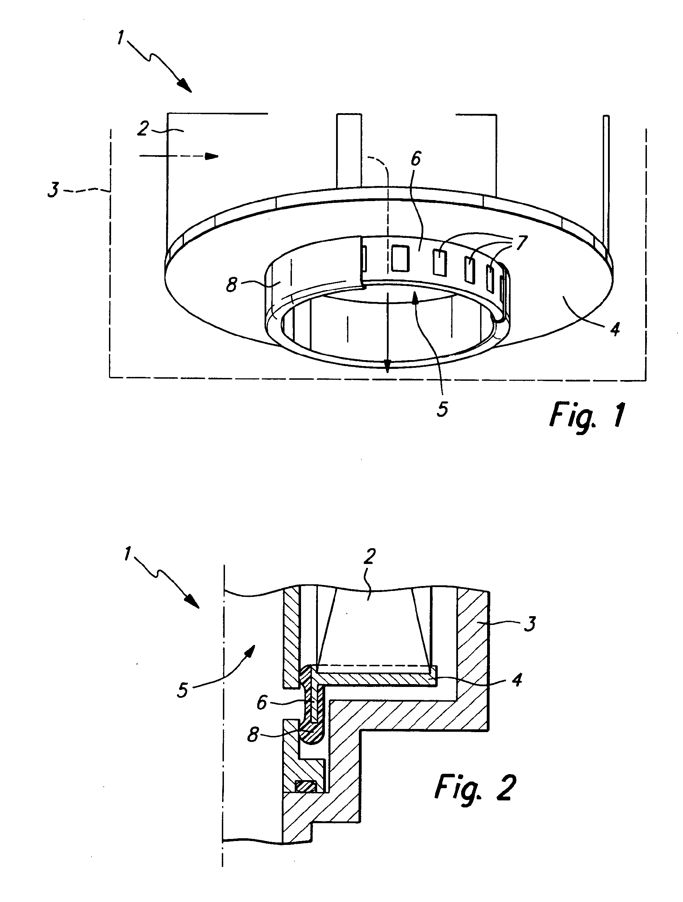

Die in Fig. 1 dargestellte Filtereinrichtung 1 umfasst ein hohlzylindrisches Filterelement 2 in einem Filtergehäuse 3, wobei das Filterelement 2 radial von außen nach innen von dem zu reinigenden Fluid durchströmt wird, so dass die äußere Mantelfläche die Rohseite und der axiale Innenraum im Filterelement die Reinseite darstellt, aus dem das gereinigte Fluid axial über die Stirnseite abgeleitet wird. Die axiale Stirnseite des Filterelementes 2 ist von einer Endscheibe 4 eingefasst, die eine zentrale Ausnehmung 5 aufweist, welche mit dem axialen Innenraum in Filterelement 2 korrespondiert. In die zentrale Ausnehmung 5 ist ein zylindrischer Stutzen 6 eingesetzt, der vorteilhafterweise einteilig mit der Endscheibe 4 ausgebildet ist. In die Wandung des Stutzens 6 sind gleichmäßig über den Umfang verteilt eine Vielzahl von Ausnehmungen 7 eingebracht, die die Wandung durchdringen. Der Stutzen 6 ist Träger eines Dichtungselementes 8, das aus einem spritzgussfähigen Material besteht, insbesondere aus einem Silikonwerkstoff wie z.B. einem teilfluorierten Flüssigsilikon (FVMQ), und an den Stutzen 6 angespritzt ist. Das Dichtungsmaterial befindet sich auf der Außenseite, der Innenseite und der freien Stirnseite des Stutzens 6 und deckt auch die Ausnehmungen 7 in der Wandung des Stutzens 6 vollständig ab. Die Ausnehmungen 7 haben die Funktion von Formelementen, die für eine verbesserte Haftung des Dichtungsmaterials am Stutzen 6 sorgen.

Die Wahl des Dichtungsmaterials hängt von dem zu reinigenden Fluid ab. Für einen Einsatz als Dieselkraftstofffilter wird vorteilhafterweise der oben genannte Werkstoff FVMQ eingesetzt, der sich durch eine hohe Kraftstoffbeständigkeit bei zugleich guter Spritzgießfähigkeit auszeichnet.

Wie der Schnittdarstellung gemäß Fig. 2 zu entnehmen, ist der Stutzen 6 einteilig mit der Endscheibe 4 ausgebildet. Das Dichtungselement 8 weist zwei Kontaktlinien auf: zum einen im Bereich der freien Stirnseite am Stutzen 6 und zum andern im Übergangsbereich zwischen Stutzen 6 und Endscheibe 4 auf der der zentralen Ausnehmung 5 abgewandten Seite. Im Bereich beider Kontaktlinien weist das Dichtungselement 8 eine größere Wandstärke auf. Um die Dichtung gegen hohe Druckspitzen resistenter zu gestalfien, kann in einer ergänzenden Ausführung ein umlaufender Ring im Bereich 10 des Dichtungsträgers ein Verstärkungsring angeordnet sein. Dieser Ring befindet sich umlaufend unter oder auf der Dichtung 8. Es besteht auch die Möglichkeit hochfeste Dichtungswerkstoffe oder Dichtungswerkstoffe mit einer hohen Reißfestigkeit zu verwenden.

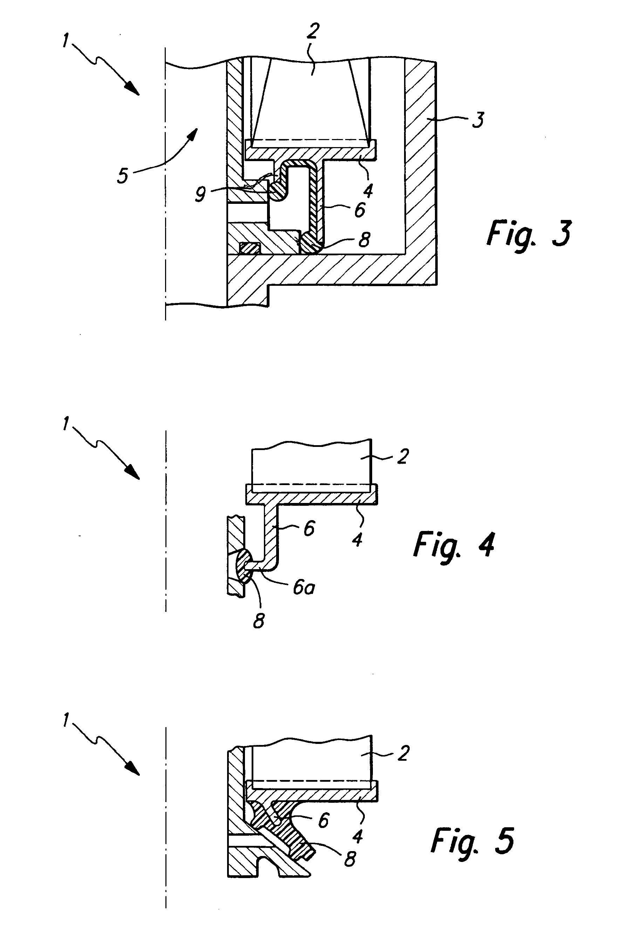

Im erfindungsgemäßen Ausführungsbeispiel gemäß Fig. 3 ist an der Endscheibe 4 ein zweiter Stutzen 9 vorgesehen, der sich konzentrisch zum ersten Stutzen 6 erstreckt, jedoch im Vergleich zum ersten Stutzen 6 einen kleineren Durchmesser aufweist. Auch ist die axiale Erstreckung des zweiten Stutzens 9 geringer als diejenige des ersten Stutzens 6. Der zweite Stutzen 9 ist ebenso wie der erste Stutzen 6 einteilig mit der Endscheibe 4 ausgebildet. Das Dichtungselement 8 ist sowohl am ersten Stutzen 6 als auch am zweiten Stutzen 9 angespritzt und erstreckt sich entlang der Innenseite des ersten Stutzens 6, an Innen- und Außenseite des zweiten Stutzens 9 sowie im zwischenliegenden Bereich an der Endscheibe 4 zwischen ersten und zweitem Stutzen 6 bzw. 9. Außerdem sind die beiden freien Stirnseiten der Stutzen 6 und 9 mit Dichtungsmaterial bedeckt.

Es bestehen insgesamt zwei Dichtlinien zwischen dem Dichtungselement 8 und dem Filtergehäuse bzw. gehäuseseitigen Bauteilen, beide Dichtlinien befinden sich im Bereich der freien Stirnseiten der Stutzen 6 und 9.

Im nicht-erfindungsgemäßen Beispiel gemäß Fig. 4 besitzt der zylindrische Stutzen 6 im Bereich seiner Stirnseite einen um 90° radial nach innen abgewinkelten Abschnitt 6a, dessen freie Stirnseite Träger des angespritzten Dichtungselementes 8 ist.

Im nicht-erfindungsgemäßen Beispiel gemäß Fig. 5 ist der einteilig mit der Endscheibe 4 ausgebildete Stutzen 6 winklig ausgeführt, er nimmt gegenüber der Ebene der Endscheibe 4 einen Winkel ungleich 90° ein und ist radial nach außen gerichtet. Das an den Stutzen 6 angespritzte Dichtungselement 8 umgreift den Stutzen stirnseitig sowie an der Innenseite und Außenseite und weist eine verhältnismäßig komplexe Querschnittsgeometrie auf. Es sind zwei Dichtlinien gebildet, über die das Dichtungselement 8 an einem weiteren Bauteil der Filtereinrichtung dichtend abgestützt ist.

## Patentansprüche

1. Filtereinrichtung, insbesondere Flüssigkeitsfilter wie Kraftstoff- oder Ölfilter, mit einem in einem Filtergehäuse (3) angeordneten, hohlzylindrischen Filterelement (2), das radial von dem zu reinigenden Fluid zu durchströmen ist, wobei der Innenraum des Filterelements (2) einen axialen Strömungsraum für das Fluid bildet, mit einer an der Stirnseite des Filterelements (2) angeordneten Endscheibe (4), an der ein Dichtungselement (8) zwischen Roh- und Reinseite des Filterelements (2) angeordnet ist, wobei das Dichtungselement (8) an einen axial überstehenden, ringförmigen Stutzen (6) angespritzt ist, der mit der Endscheibe (4) verbunden ist, **dadurch gekennzeichnet, dass** zwei konzentrische Stutzen (6, 9) vorgesehen sind, an die jeweils Dichtungsmaterial zur Ausbildung des Dichtungselements (8) angespritzt ist.

2. Filtereinrichtung nach Anspruch 1, **dadurch gekennzeichnet, dass** das Dichtungselement (8) aus einem Silikonmaterial besteht.

3. Filtereinrichtung nach Anspruch 2, **dadurch gekennzeichnet, dass** als Silikonmaterial Fluor-Silikon-Kautschuk (FVMQ) verwendet wird.

4. Filtereinrichtung nach einem der Ansprüche 1 bis 3, **dadurch gekennzeichnet, dass** der Stutzen (6) Formelemente (7) aufweist zur verbesserten Haftung des Dichtungsmaterials.

5. Filtereinrichtung nach Anspruch 4, **dadurch gekennzeichnet, dass** die Formelemente als Ausnehmungen (7) im Stutzen (6) ausgebildet sind.

6. Filtereinrichtung nach einem der Ansprüche 1 bis 5, **dadurch gekennzeichnet, dass** der Stutzen (6) einen winklig zur Achsrichtung verlaufenden Abschnitt (6a) aufweist, an den das Dichtungsmaterial angespritzt ist.

7. Filtereinrichtung nach Anspruch 6, **dadurch gekennzeichnet, dass** der Stutzen (6) einen axialen, mit der Endscheibe (4) verbundenen Abschnitt und einen senkrecht zum axialen Abschnitt verlaufenden, weiteren Abschnitt (6a) als Träger des Dichtungselements (8) aufweist.

8. Filtereinrichtung nach Anspruch 6, **dadurch gekennzeichnet, dass** der Stutzen (6) aus einem winklig zur Endscheibe (4) angeordneten Abschnitt als Träger des Dichtungselements (8) besteht.

9. Filtereinrichtung nach einem der Ansprüche 1 bis 8, **dadurch gekennzeichnet, dass** das Dichtungsmaterial an der Innenseite, der Außenseite und der freien Stirnseite des Stutzens angespritzt ist.

10. Filtereinrichtung nach einem der Ansprüche 1 bis 9, **dadurch gekennzeichnet, dass** der Stutzen (8) einteilig mit der Endscheibe (4) ausgebildet ist.

## Claims

1. Filtering device, in particular liquid filter such as fuel or oil filter, with a hollow-cylindrical filter element (2) disposed in a filter housing (3) and radially flowed through by the fluid to be cleaned, the interior space of the filter element (2) forming an axial flow chamber for the fluid, with an end disk (4) at which a sealing element (8) is disposed between raw and clean side of the filter element (2) and which is disposed on the front face of the filter element (2), the sealing element (8) being injection molded to an axially protruding annular connecting piece (6) connected with the end disk (4), **characterized in that** two concentric connecting pieces (6, 9) are provided to which sealing compound for forming the sealing element (8) is injection molded.

2. Filtering device according to claim 1, **characterized in that** the sealing element (8) is made of a silicone material.

3. Filtering device according to claim 2, **characterized in that** fluorosilicone rubber (FVMQ) is used as silicone material.

4. Filtering device according to one of the claims 1 to 3, **characterized in that** the connecting piece (6) features molded elements (7) for an enhanced adhesion of the sealing compound.

5. Filtering device according to claim 4, **characterized in that** the molded elements are designed as recesses (7) in the connecting piece (6).

6. Filtering device according to one of the claims 1 to 5, **characterized in that** the connecting piece (6) features a section (6a) extending angularly with regard to the axial direction to which the sealing compound is injection molded.

7. Filtering device according to claim 6, **characterized in that** the connecting piece (6) features an axial section connected with the end disk (4) and another section (6a) used as support for the sealing element (8) and extending perpendicularly with regard to the axial section.

8. Filtering device according to claim 6, **characterized in that** the connecting piece (6) is made of a section used as support for the sealing element (8) and disposed angularly with regard to the end disk (4).

9. Filtering device according to one of the claims 1 to 8, **characterized in that** the sealing compound is injection molded to the interior side, the exterior side, and the free front face of the connecting piece.

10. Filtering device according to one of the claims 1 to 9, **characterized in that** the connecting piece (8) is designed as one piece with the end disk (4).

## Revendications

1. Dispositif de filtration, en particulier filtre à liquide comme filtre à carburant ou filtre à huile, avec un élément filtrant (2) en forme de cylindre creux, disposé dans un boîtier de filtre (3) et pouvant être parcouru en sens radial par le fluide à purifier, l'espace intérieur de l'élément filtrant (2) formant un espace d'écoulement axial pour le fluide, avec un disque d'extrémité (4) sur lequel un élément d'étanchéité (8) est disposé entre le côté brut et le côté pur de l'élément filtrant (2) et qui est placé sur la face frontale de l'élément filtrant (2), l'élément d'étanchéité (8) étant injecté sur une tubulure (6) annulaire dépassant en sens axial et reliée au disque d'extrémité (4), **caractérisé en ce que** deux tubulures (6, 9) concentriques sont prévues, sur lesquelles un matériau d'étanchéité servant à former l'élément d'étanchéité (8) est injecté.

2. Dispositif de filtration selon la revendication 1, **caractérisé en ce que** l'élément d'étanchéité (8) est réalisé dans une matière silicone.

3. Dispositif de filtration selon la revendication 2, **caractérisé en ce que** du caoutchouc de fluorosilicone (FVMQ) est utilisé en tant que matière silicone.

4. Dispositif de filtration selon l'une des revendications 1 à 3, **caractérisé en ce que** la tubulure (6) présente des éléments moulés (7) en vue d'une meilleure adhésion du produit d'étanchéité.

5. Dispositif de filtration selon la revendication 4, **caractérisé en ce que** les éléments moulés sont exécutés en tant qu'évidements (7) dans la tubulure (6).

6. Dispositif de filtration selon l'une des revendications 1 à 5, **caractérisé en ce que** la tubulure (6) présente une section (6a) évoluant den manière angulaire au sens axial sur laquelle le matériau d'étanchéité est injecté.

7. Dispositif de filtration selon la revendication 6, **caractérisé en ce que** la tubulure (6) présente une section axiale reliée au disque d'extrémité (4) et une autre section (6a) évoluant verticalement par rapport à la section axiale en tant que support de l'élément d'étanchéité (8).

8. Dispositif de filtration selon la revendication 6, **caractérisé en ce que** la tubulure (6) est composée d'une section disposée de manière angulaire au disque d'extrémité (4) en tant que support de l'élément d'étanchéité (8).

9. Dispositif de filtration selon l'une des revendications 1 à 8, **caractérisé en ce que** le matériau d'étanchéité est injecté sur la face intérieure, la face extérieure et la face frontale libre de la tubulure.

10. Dispositif de filtration selon l'une des revendications 1 à 9, **caractérisé en ce que** la tubulure (8) est exécutée en un bloc avec le disque d'extrémité (4).
